# FASCICULE DE BREVET EUROPEEN

(11) **EP 2 156 233 B1**
(45) Date de publication et mention de la délivrance du brevet: **12.10.2011**
(21) Numéro de dépôt: 08805967.0
(22) Date de dépôt: 10.06.2008
(51) Int. Cl.: G02B 6/44

(54) **BOITIER DE RACCORDEMENT POUR FIBRES OPTIQUES**
VERBINDUNGSGEHÄUSE FÜR LICHTWELLENLEITER
CASE FOR CONNECTING OPTICAL FIBRES

(30) Priorité: 11.06.2007 FR 0755654
(43) Date de publication de la demande: 24.02.2010
(73) Titulaire: Free, Paris 75008 (FR)
(72) Inventeur: FORTIER, Eric, F-77720 Aubepierre Ozouer Le Repos (FR)
(74) Mandataire: Dupuis-Latour, Dominique
(86) Numéro de dépôt international: PCT/FR2008/051032
(87) Numéro de publication internationale: WO 2008/152341

(56) Documents cités:
- EP-A- 0 333 316
- EP-A- 0 744 640
- DE-A1- 10 041 337
- US-A- 5 495 549

## Description

L'invention concerne le raccordement de fibres optiques.

Elle s'applique en particulier, mais non exclusivement, au raccordement de fibres optiques pour l'installation d'un réseau de fibres optiques, pour la fourniture de services de communication haut-débit. Les DE 100 41 337 A1, EP 0 774 640 A1, EP 0 333 316 A2 et US 5 495 549 A divulguent un tel boîtier de raccordement, qui inclut en particulier des moyens internes de lovage d'une longueur de fibre en excès après que l'épissure ait été réalisée.

Cette longueur de fibre peut alors être utilisée pour préparer les fibres en vue de leur raccordement. Dans le cas où une épissure est incorrectement réalisée, l'installateur dispose alors, dans le boîtier, d'une longueur suffisante pour réaliser une nouvelle épissure sans devoir réintroduire une longueur de fibre supplémentaire dans le boîtier, ni devoir déplacer le boîtier par rapport aux fibres. La préparation des fibres pour leur raccordement est donc très simple à réaliser. Les moyens de lovage sont agencés pour que le rayon de courbure de la fibre

soit supérieur à un rayon de courbure prédéterminé. Ainsi, les moyens de lovage permettent de ne pas altérer la qualité du futur signal destiné à parcourir la fibre. L'invention a pour objet un boîtier de ce type, tel que défini au préambule de la revendication 1, qui correspond aux enseignements du DE 100 41 337 A1 précité.

Dans le cas où le boîtier est moulé, le procédé de moulage nécessite généralement le passage d'éléments de moule au travers d'une paroi, par exemple le fond du boîtier, afin de mouler des parties internes au boîtier. Lors du retrait de ces éléments du moule, il subsiste des ouvertures dans la paroi du boîtier. Pour résoudre ce problème, l'invention propose d'associer au boîtier une partie de couverture du fond du boîtier, présentant les éléments particuliers énoncés à la partie caractérisante de la revendication 1. Les sous-revendications visent des modes de réalisation spécifiques, avantageux. La couverture permet ainsi à la fois d'assurer l'étanchéité du boîtier en obturant ces ouvertures, par exemple en les traversant, et d'améliorer l'esthétique du boîtier en recouvrant les ouvertures.

L'invention sera mieux comprise à la lecture de la description qui va suivre, donnée uniquement à titre d'exemple non limitatif et faite en se référant aux dessins dans lesquels :
- la figure 1 est une vue en perspective de dessus d'un boîtier de raccordement selon l'invention représenté dans un état fermé ;
- la figure 2 est une vue en perspective de dessous du boîtier de la figure 1 ;
- la figure 3 est une vue en perspective du boîtier de la figure 1 dans un état ouvert ;
- les figures 4 et 5 sont des vues respectivement de dessus et de dessous du boîtier de la figure 3 ;
- les figures 6, 7 et 8 sont des vues de dessus d'un ensemble selon l'invention comprenant le boîtier de la figure 3 et des fibres optiques lovées suivant différents agencements ;
- la figure 9 est une vue en perspective de dessus d'un ensemble d'un boîtier de raccordement et d'une couverture d'un fond du boîtier de la figure 9 selon un premier mode de réalisation de l'invention ;
- la figure 10 est une vue en perspective de la couverture de la figure 9 ;
- la figure 11 est une vue en perspective de dessous du boîtier de la figure 9 ;
- la figure 12 est une vue du boîtier de la figure 11 dépourvu de la couverture ;
- la figure 13 est une vue de détail du boîtier de la figure 9 ;
- la figure 14 est une vue du boîtier de la figure 13 dépourvu de la couverture ;
- la figure 15 est une vue en perspective de dessus d'une extrémité d'un ensemble d'un boîtier et d'une couverture du fond du boîtier selon un deuxième mode de réalisation de l'invention, et
- la figure 16 est une vue en perspective de dessous d'une extrémité du boîtier de la figure 15.

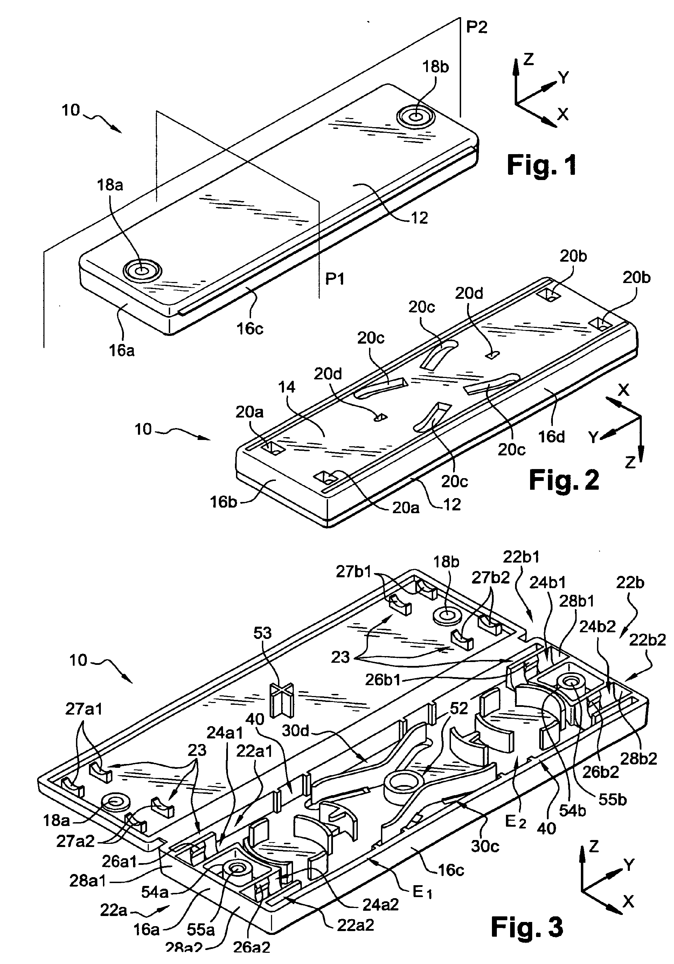

On a représenté sur les figures 1 à 8 un boîtier de raccordement selon l'invention et désigné par la référence générale 10. Sur ces figures, on a représenté des axes X, Y, Z orthogonaux entre eux correspondant aux orientations transversale X, longitudinale Y et verticale Z du boîtier tel qu'illustré.

En l'espèce, le boîtier 10 est moulé d'une seule pièce dans une matière thermoplastique, par exemple comprenant du polypropylène et/ou du polyéthylène. Comme représenté sur la figure 1, le boîtier 10 présente deux plans P1, P2 de symétrie respectivement parallèles aux plan XZ et YZ et passant par le centre du boîtier.

En référence aux figures 1 et 2, le boîtier 10 est délimité d'une part, par un couvercle 12 et un fond 14 tous deux parallèles au plan XY et, d'autre part, par des parois externes périphériques 16a, 16b, 16c et 16d. Les parois 16a, 16b et 16c, 16d sont opposées deux à deux. Les parois 16a, 16b sont parallèles au plan XZ alors que les parois 16c, 16d sont parallèles au plan YZ. Le couvercle 12 présente deux orifices 18a, 18b aptes à recevoir des vis pour le verrouillage du couvercle en position fermée. Les orifices 18a, 18b sont situés à proximité des parois 16a, 16b du boîtier. En outre, le fond 14 présente des ouvertures 20a, 20b, 20c et 20d, que l'on décrira précisément plus bas.

Comme représenté sur la figure 3, le boîtier 10 comprend deux groupes 22a, 22b d'entrées pour le passage de fibres optiques unitaires. Ces deux groupes 22a, 22b s'étendent respectivement sur les parois 16a, 16b du boîtier 10. Chaque groupe 22a, 22b comprend respectivement deux entrées 22a1, 22a2 et 22b1, 22b2.

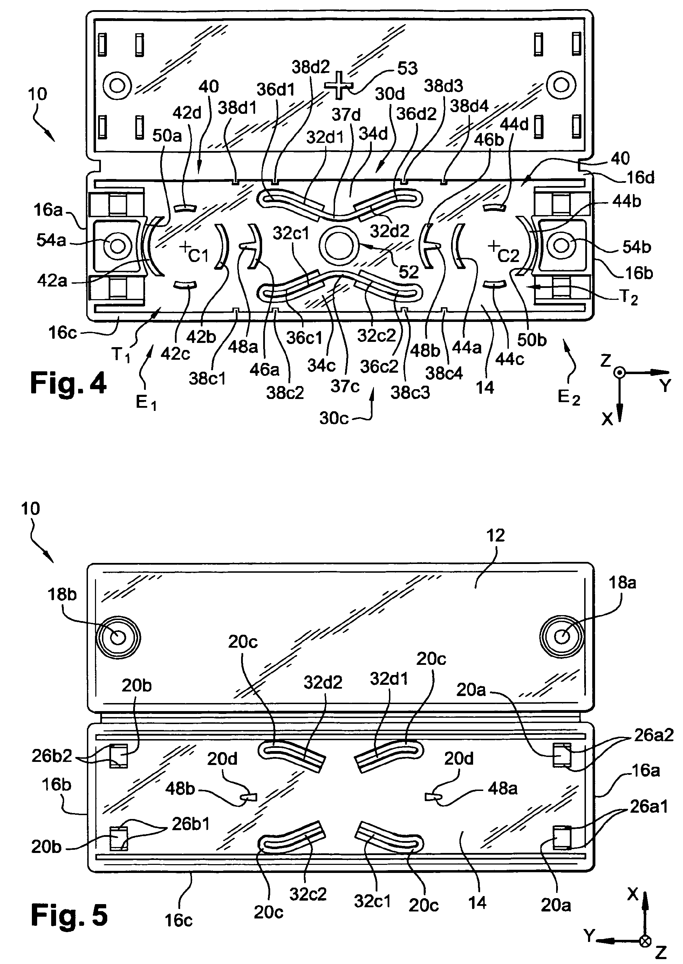

Le boîtier comprend également des moyens de fixation 23 d'une fibre optique par rapport au boîtier. Les moyens de fixation 23 comprennent des logements 24a1, 24a2, 24b1, 24b2 pour la réception de la fibre et présentant une forme de canal sensiblement cylindrique. Chaque logement s'étend vers l'intérieur à partir de la paroi respective en regard des entrées 22a1, 22a2, 22b1, 22b2 et sur une longueur correspondant à 1/10^{ème} environ de la longueur totale du boîtier. Chaque logement comporte deux reliefs 26a1, 26a2, 26b1, 26b2 de blocage de la fibre dans le logement. Les deux reliefs d'un même logement sont disposés en regard l'un de l'autre de part et d'autre du canal, chaque relief faisant saillie vers l'intérieur du canal. On notera que, lors de la fabrication du boîtier 10, le moulage des reliefs 26a1, 26a2, 26b1, 26b2 impose la pénétration d'éléments du moule dans le boîtier, d'où la présence des ouvertures 20a et 20b sur le fond 14 comme représenté sur la figure 5. Les moyens de fixation 23 comprennent également des paires de reliefs de maintien 27a1, 27a2, 27b1, 27b2 de fibre optique portés par le couvercle 12. Les reliefs de chaque paire s'étendent en saillie du couvercle 12 et présente une forme d'arche de façon à enserrer le câble en coopération avec les logements 24a1, 24a2, 24b1, 24b2. La paire 27a1 comprend deux reliefs distants l'un de l'autre d'une distance sensiblement égale à la longueur du canal du logement 24a1. Chaque paire 56a2, 56b1, 56b2 présente une caractéristique analogue.

Les parois 10a, 10b comportent respectivement des opercules 28a1, 28a2 et 28b1, 28b2 aptes à être séparés du boîtier 10 de façon à rendre accessible les entrées respectives 22a1, 22a2 et 22b1, 22b2 afin de faire pénétrer la fibre dans le boîtier 10. Les opercules présentent une épaisseur plus petite que l'épaisseur de la paroi qui les porte, ceci afin de faciliter leur séparation de cette paroi.

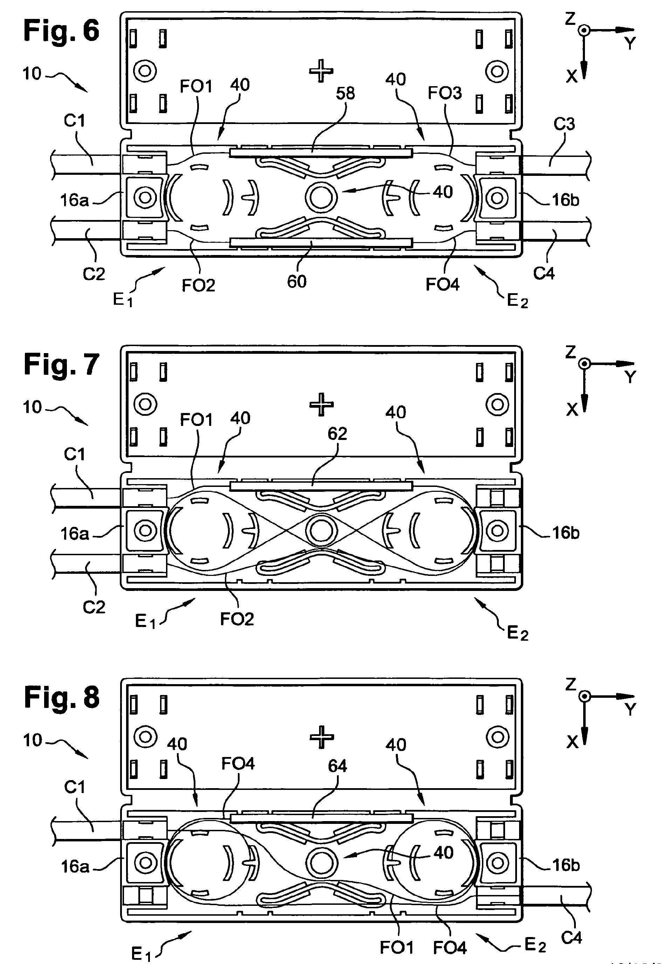

Le boîtier 10 comprend également deux organes 30c et 30d aptes à maintenir la fibre optique respectivement contre les parois 16c et 16d, comme cela est représenté sur les figure 6 à 8. En référence à la figure 4, chaque organe de maintien 30c, 30d comprend respectivement deux languettes élastiques 32c1, 32c2 et 32d1, 32d2 aptes à maintenir chacune la fibre de part et d'autre d'un emplacement 34c, 34d pour la réception d'une épissure. Chaque languette élastique s'étend à partir d'une ligne médiane du boîtier vers l'extérieur du boîtier en direction d'une des entrées en se rapprochant de la paroi contre laquelle elle est apte à maintenir la fibre. En outre, chaque languette élastique présente, à son extrémité, une portion plane 36c1, 36c2, 36d1, 36d2 permettant de maintenir efficacement la fibre contre la paroi correspondante. Les portions planes 36c1, 36c2 sont en regard de la paroi 16c alors que les portions planes 36d1, 36d2 sont en regard de la paroi 16d. Les portions 36c1, 36c2, 36d1, 36d2 sont parallèles à la direction Z. Les languettes élastiques 32c1 et 32c2 sont reliées entre elles par une partie 37c reliée au fond 14 et faisant saillie par rapport à celui-ci en s'étendant selon la direction verticale Z. Les languettes élastiques ne sont pas reliées directement au fond du boîtier. La partie 37c est plus éloignée de la paroi 16c que les parties plane 36c1 et 36c2. Ainsi disposées, les languettes 32c1, 32c2 et la partie 37c présentent une forme d'accent circonflexe. Les languettes 32d1 et 32d2 sont reliées entre elles par une partie 37d et leurs caractéristiques se déduisent *mutatis mutandis* à partir de celles des languettes 32c1, 32c2 et de la partie 37c dont elles sont symétriques suivant le plan médian P2. On notera que, lors de la fabrication du boîtier 10, le moulage des languettes 32c1, 32c2, 32d1, 32d2 impose la pénétration d'éléments du moule dans le boîtier, d'où la présence des ouvertures 20c sur le fond 14 comme représenté sur la figure 5.

Le boîtier 10 comprend également des reliefs de maintien 38c1-4, 38d1-4 de la fibre optique. Ces reliefs 38c1-4, 38c1-4 s'étendent en saillie des parois 16c, 16d perpendiculairement à celles-ci et sont parallèles à la direction verticale Z. Les reliefs 38c1, 38c2 sont situées de part et d'autre de la projection du bord de la languette 32c1 sur la paroi 16c. De façon analogue, les reliefs 38c3, 38c4 sont situées de part et d'autre de la projection du bord de la languette 32c2 sur la paroi 16c. Le boîtier présentant deux plans de symétrie P1, P2, les reliefs 38d1-4 présentent des caractéristiques qui se déduisent *mutatis mutandis* de celles des reliefs 38c1-4.

Le boîtier 10 comprend également des moyens de lovage 40 pour maintenir lovée une ou plusieurs fibres dans le boîtier. En l'espèce, les moyens de lovage 40 définissent deux emplacements E1, E2 distincts non coaxiaux. Chaque emplacement E1, E2 comprend un ensemble d'éléments. L'ensemble d'éléments forme partiellement un tambour T1, T2 autour duquel une fibre peut être enroulée. Les tambours T1, T2 présentent respectivement des axes passant par des centres C1, C2 des tambours. Les axes sont confondus avec le plan P2 et parallèles à la direction Z. L'ensemble situé dans l'emplacement E1 comprend quatre éléments 42a, 42b, 42c et 42d. Chaque élément 42ad présente une forme courbe formant un segment périphérique du tambour. Les éléments 42a, 42b s'étendent chacun sur 1/5^{ème} de tour et présentent un point de tangence avec un plan parallèle au plan XZ alors que les éléments 42c, 42d s'étendent sur 1/10^{ème} de tour entre les parois 16c, 16d et présentent un point de tangence avec un plan parallèle au plan YZ. L'ensemble situé dans l'emplacement E2 comprend quatre éléments 44a-d dont les caractéristiques se déduisent *mutatis mutandis* de celles des éléments 42a-d.

Les moyens de lovage 40 comprennent également des arcs de guidage 46a, 46b s'étendant ici sur 1/5^{ème} de tour environ. Chaque arc de guidage 46a, 46b est disposé respectivement en regard de l'élément 42b, 44a de chaque tambour et coaxialement à celui-ci. Chaque arc de guidage 46a, 46b est distant de l'élément 42b, 44a d'au moins 2mm.

Chaque arc de guidage 46a, 46b comporte une patte de guidage 48a, 48b s'étendant parallèlement au fond 14 à partir du bord supérieur libre de l'arc. Chaque patte 48a, 48b est située sensiblement au milieu de l'arc correspondant et présente une forme générale de pointe. Chaque patte 48a, 48b pointe vers l'élément 42b, 44a du tambour T1, T2 en regard duquel l'arc se trouve. On notera que, lors de la fabrication du boîtier 10, le moulage des pattes 48a, 48b impose la pénétration d'éléments du moule à travers le fond du boîtier, d'où la présence des ouvertures 20d sur le fond 14 comme représenté sur la figure 5.

Les moyens de lovage 40 comprennent aussi deux parois arquées 50a, 50b s'étendant ici sur 1/5^{ème} de tour environ. Chaque paroi arquée 50a, 50b est disposée en regard de l'élément 42a, 44b de chaque tambour et sensiblement coaxialement à celui-ci. Chaque paroi arquée 50a, 50b est distante de l'élément 42a, 44b d'une distance inférieure à 2mm.

Les éléments 42a-d, 44a-d, les arcs 46a-b et les parois 50a, 50b font saillie suivant la direction Z par rapport au fond 14 et sont agencés pour donner à la fibre un rayon de courbure supérieur à un rayon de courbure prédéterminé, et à cette fin ont en l'espèce un rayon supérieur à ce rayon prédéterminé. Ce dernier dépend essentiellement des caractéristiques techniques de la fibre optique utilisée.

En outre, les moyens de lovage 40 comprennent un cylindre central 52 situé entre les parties 37c et 37d. Ce cylindre présente une paroi faisant saillie par rapport au fond 14 et sensiblement parallèle à la direction verticale Z.

Le couvercle 12 porte un croisillon 53 situé au centre du couvercle et s'étendant en saillie de ce dernier. Dans l'état fermé du boîtier, ce croisillon 53 se loge dans le cylindre 52 assurant ainsi une fonction de centrage du couvercle 12 par rapport au fond 14.

De plus, le boîtier 10 comprend deux fûts de vissage 54a, 54b situés respectivement entre les entrées 24a1, 24a2 et 24b1, 24b2. Chaque fût 54a, 54b présente un orifice 55a, 55b permettant de recevoir la vis traversant l'orifice 18a, 18b correspondant.

On a représenté sur les figures 6 à 8 un ensemble comprenant le boîtier de raccordement et quatre fibres optiques FO1 FO2, FO3, F04 raccordées deux à deux et lovées dans les moyens de lovage 40. Chaque ensemble appartient à un réseau de fibres optiques (non représenté). Chaque fibre FO1-4 à l'extérieur du boîtier est protégée dans un câble respectivement référencé C1-4. Chaque câble comprend une seule fibre optique entourée d'une gaine. Dans le boîtier, les fibres sont dépourvues de gaine.

En référence à la figure 6, les fibres FO1 et FO3 qui entrent dans le boîtier à travers les parois 16a, 16b opposées, à travers les orifices correspondant au retrait des opercules 28a1, 28b1 et qui sont maintenus dans les logements 24a1, 24b1, sont raccordées entre elles par une épissure 58 de type mécanique. Les fibres F02 et FO4 qui entrent dans le boîtier à travers les parois 16a, 16b opposées, à travers les orifices correspondant au retrait des opercules 28a2, 28b2 et qui sont maintenus dans les logements 24a2, 24b2, sont raccordées entre elles également par une épissure 60 de type mécanique. En variante, les fibres sont raccordées entre elles par une épissure de type par fusion. Ici, aucun lovage n'est réalisé.

Comme illustré sur la figure 7, les fibres FO1 et FO2 sont raccordées entre elles par une épissure 62 de type mécanique. Les moyens de lovage 40 sont agencés pour permettre à la fibre FO2, d'une part, de changer de sens d'enroulement le long de la fibre et, d'autre part, de se croiser au moins une fois dans le boîtier 10. Les fibres FO3 et FO4 sont ici absentes. En suivant la fibre FO2 depuis le logement 24a2, la fibre F02 est disposée entre le cylindre 52 et la partie 37c, puis fait demi tour sur le tambour T2 depuis l'élément 44c vers l'élément 44d en passant entre l'élément 44b et la paroi 50b puis est disposée entre le cylindre 52 et la partie 37c à nouveau, puis fait demi tour sur le tambour T1 depuis l'élément 42d vers l'élément 42c en passant entre l'élément 42a et la paroi 50a, puis est disposée entre le cylindre 52 et la partie 37d puis fait demi tour sur le tambour T2 comme précédemment avant d'être raccordées à la fibre FO1 dans l'emplacement 34d. La fibre FO1 suit le même trajet qu'à la figure 6.

En référence à la figure 8, les fibres FO1 et FO4 sont raccordées entre elles par une épissure 64 de type mécanique. Les moyens de lovage 40 sont agencés pour permettre à la fibre de s'enrouler sur au moins un tour complet et ce, dans chaque emplacement E1, E2. Les fibres FO2 et FO3 sont ici absentes. En suivant la fibre FO4 depuis le logement 24b2, la fibre FO4 est disposée le long de la paroi 16c entre les languettes élastiques 32c1, 32c2 et celle-ci, puis fait un tour complet autour des éléments du tambour T1 avant d'être raccordée dans l'emplacement 34d. En suivant la fibre FO1 depuis le logement 24a1, la fibre FO1 est disposée entre le cylindre 52 et la partie 37c puis fait un tour complet autour des éléments du tambour T2 avant d'être raccordée dans l'emplacement 34d.

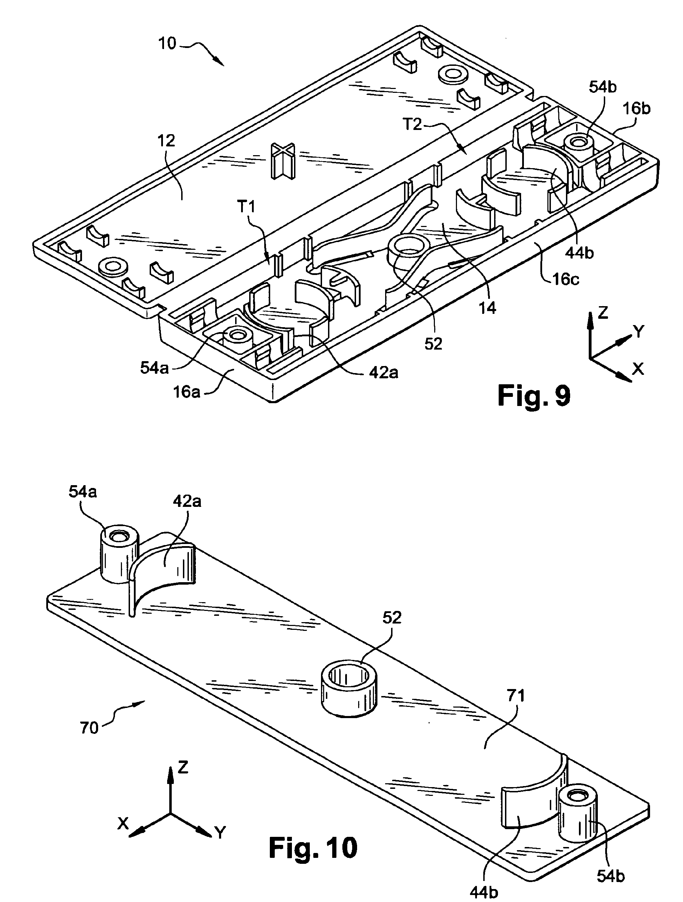

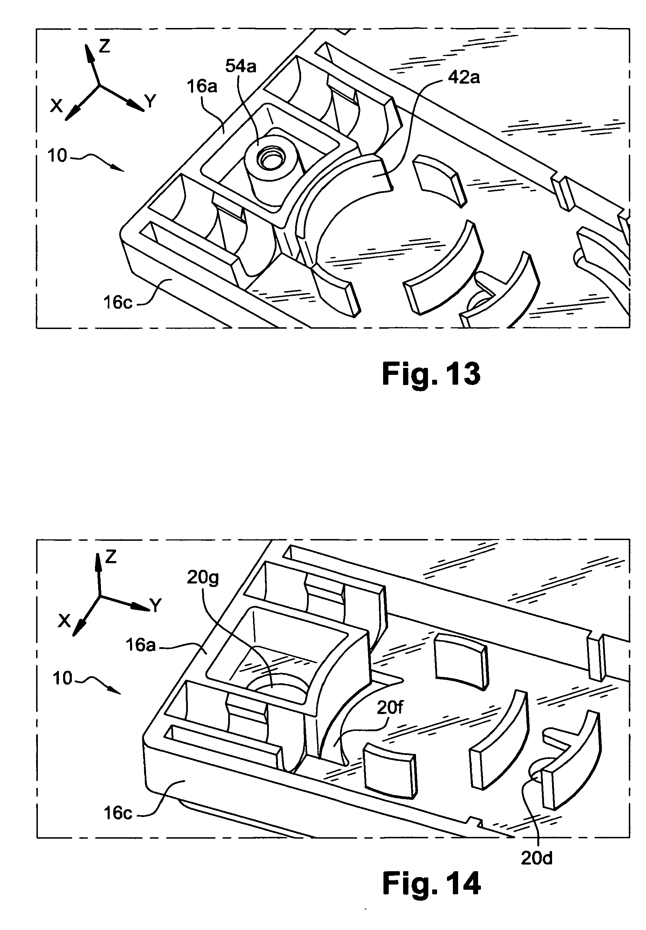

On a représenté sur les figures 9 et 11 à 14 un ensemble d'un boîtier de raccordement 10 et d'une couverture du fond 14 selon un premier mode de réalisation de l'invention. Sur les figures 9 à 16, les éléments analogues aux éléments représentés sur les figures précédentes sont désignés par des références identiques.

Dans ce premier mode de réalisation, l'ensemble comprend le boîtier 10 et une partie 70 apte à être rapportée de façon amovible au boîtier 10. Cette partie 70, illustrée sur la figure 10, forme une couverture du fond 14 du boîtier. La couverture 70 comprend une embase 71 portant le cylindre 52, les éléments 42a et 44b des tambours T1 et T2 ainsi que les fûts de vissage 54a, 54b.

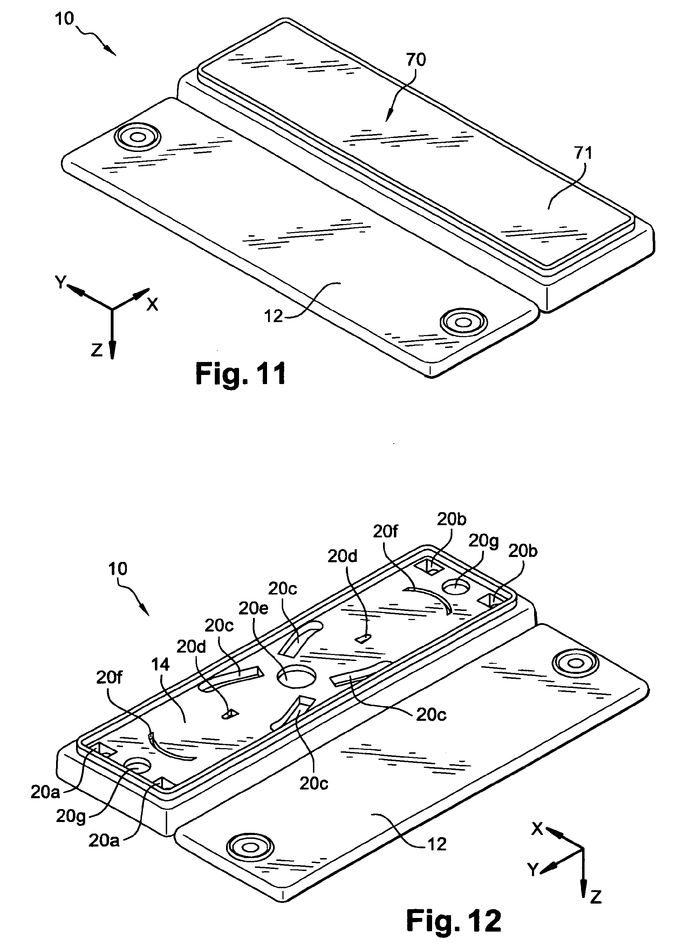

En référence aux figures 12 à 14, le fond 14 comprend, en plus des orifices 20a-d, des orifices 20e, 20f, et 20g pour les passages respectifs du cylindre 52, des éléments 42a, 44b et des fûts 54a, 54b. Ces orifices 20e-g présentent des sections dans le plan XY sensiblement identiques aux sections des cylindre 52, éléments 42a, 44b et fûts 54a, 54b dans ce plan XY. Ainsi, la couverture 70 est rapportée par le dessous du boîtier en traversant le fond 14 de ce dernier, comme représenté sur la figure 11. Les orifices 20a-g étant obturés, l'étanchéité du boîtier 10 est assurée.

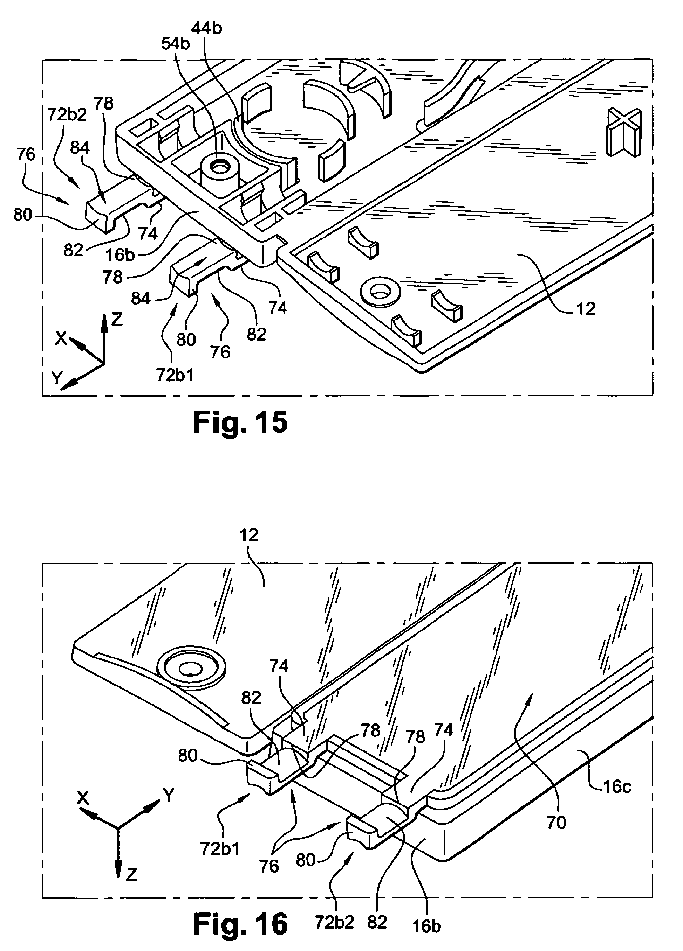

On a représenté sur les figures 15 et 16 un ensemble d'un boîtier de raccordement 10 et d'une couverture 70 selon un deuxième mode de réalisation. Sur les figures 15 et 16, les éléments analogues aux éléments représentés sur les figures précédentes sont désignés par des références identiques.

A la différence du premier mode de réalisation, la couverture 70 comporte de plus des ergots 72a1, 72a2, 72b1, 72b2 de support des câbles C1-4 en amont des entrées 22a1, 22a2, 22b1, 22b2. Chaque ergot présente deux portions 74 et 76. La première portion 74 s'étend sensiblement parallèlement au plan XY à partir d'un bord de la couverture 70 vers l'extérieur du boîtier. La deuxième portion 76 présente une forme générale en « U » et comporte deux montants 78 et 80 reliés entre eux par une barre transversale 82. Les montants 78, 80 présentent des dimensions permettant de faire affleurer la face supérieure 84 de la barre 82 avec le fond du logement en face duquel l'ergot est situé. Cette face supérieure 84 est renflée de façon à épouser le câble que porte l'ergot. Les ergots permettent la fixation des câbles à fibre optique, par exemple par serrage de ces derniers à l'aide d'un collier de serrage sur la barre 82. Le montant 80 assure alors le maintien du collier de serrage.

Parmi les avantages de l'invention, on notera que le boîtier peut ne pas présenter de moyens de fixation du boîtier à un support, comme une paroi. En effet, dans le cas où le boîtier est réalisé en matière relativement légère, par exemple en matière plastique, le boîtier est auto-portant. Les moyens de fixations 23 permettent d'assurer l'arrimage des câbles au boîtier, qui compte tenu de sa masse relativement faible, peut être supporté par les câbles.

De plus, on notera que les moyens de lovage 40 sont situés dans un espace central compris entre d'une part, les organes 30c et 30d et, d'autre part les entrées 22a1, 22a2 et 22b1, 22b2. Cet agencement permet à l'installateur de disposer d'un boîtier de taille relativement réduite et permettant un grand nombre d'agencements des loves des fibres.

L'invention ne se limite pas aux modes de réalisation précédemment décrits.

En effet, le boîtier pourra présenter diverses dimensions. Ainsi, à titre d'exemple, les dimensions longitudinale, transversale et verticale du boîtier varient du centimètre à plusieurs décimètres. De préférence, la longueur du boîtier sera inférieure à 30 cm et même inférieure à 20 cm. Sa largeur sera inférieure à 10cm et même inférieure à 6 cm.

## Revendications

1. Boîtier (10) pour le raccordement de fibres optiques, comprenant :
- un fond (14) traversé par une pluralité d'ouvertures (20a-20g;
- des parois périphériques externes (16a-16d) avec deux groupes d'entrées (22a, 22b) pour le passage de fibres optiques unitaires (FO1-FO4), les deux groupes s'étendant respectivement sur deux parois (16a, 16b) opposées l'une à l'autre ; et
- un couvercle (12) ;
ce boîtier comportant des moyens de lovage (40) distincts des parois externes, pour maintenir lovée au moins une fibre (FO1-FO4) dans le boîtier (10) ;
boîtier **caractérisé en ce qu'**il comprend en outre :
- une partie de couverture (70) du fond du boîtier :
• comprenant une embase (71) portant un cylindre (52) et des éléments (42a, 42b) desdits moyens de lovage, ainsi que des fûts de vissage (54a, 24b),
• et apte à être rapportée de façon amovible par le dessous du boîtier (10) en traversant le fond (14) du boîtier (10) et en obturant lesdites ouvertures (20a-20g) de manière à assurer l'étanchéité du boîtier.

2. Boîtier (10) selon la revendication 1, dans lequel le fond (14), les parois périphériques externes (16a-16d) et le couvercle (12) sont moulés d'une seule pièce.

3. Boîtier (10) selon la revendication 1, dans lequel les moyens de lovage du boîtier comportent des languettes élastiques (32c1-32c4) venues de moulage avec des ouvertures correspondantes (20c) présentes en vis-à-vis sur le fond, ces languettes élastiques étant reliées entre elles par une partie (37c) reliée au fond et faisant saillie par rapport à celui-ci.

4. Boîtier (10) selon la revendication 1, dans lequel les moyens de lovage du boîtier comportent des pattes de guidage (48a, 48b) venues de moulage avec des ouvertures correspondantes (20d) présentes en vis-à-vis sur le fond, ces pattes de guidage étant en forme générale de pointe et s'étendant parallèlement au fond à partir du bord supérieur libre d'un arc de guidage (46a, 46b)

5. Boîtier (10) selon la revendication 1, dans lequel la partie (70) de couverture du fond du boîtier comprend en outre des ergots (72a1, 72a2, 72b1, 72b2) de support des fibres, en amont desdits groupes d'entrées (22a, 22b).

## Claims

1. Box (10) for connecting optical fibres, comprising:
- a bottom (14) traversed by a plurality of openings (20a-20g);
- external peripheral walls (16a-16d) with two groups of inlets (22a, 22b) for the passage of unitary optical fibres (FO1-FO4), the two groups extending respectively over two mutually opposed walls (16a, 16b); and
- a cover (12);
this box comprising coiling means (40) separate from the external walls in order to maintain at least one fibre (FO1-FO4) coiled in the box (10);
which box is **characterized in that** it additionally comprises:
- a part (70) for covering the bottom of the box:
• comprising a base (71) bearing a cylinder (52) and elements (42a, 42b) of the said coiling means, and also screw posts (54a, 54b),
• and capable of being fitted in a removable manner from underneath the box (10) while passing through the bottom (14) of the box (10) and blocking off the said openings (20a-20g) so as to seal the box.

2. Box (10) according to Claim 1, in which the bottom (14), the external peripheral walls (16a-16d) and the cover (12) are moulded in one piece.

3. Box (10) according to Claim 1, in which the coiling means of the box comprise elastic tongues (32c1-32c4) integrally moulded with corresponding openings (20c) present opposite one another on the bottom, these elastic tongues being connected to one another by a part (37c) connected to the bottom and projecting therefrom.

4. Box (10) according to Claim 1, in which the coiling means of the box comprise guide tabs (48a, 48b) integrally moulded with corresponding openings (20d) present opposite one another on the bottom, these guide tabs having a generally pointed shape and extending parallel to the bottom from the free upper edge of a guide arc (46a, 46b).

5. Box (10) according to Claim 1, in which the part (70) for covering the bottom of the box additionally comprises lugs (72a1, 72a2, 72b1, 72b2) for supporting the fibres, upstream of the said groups of inlets (22a, 22b).

## Patentansprüche

1. Gehäuse (10) für den Anschluss von Lichtleitfasern, das Folgendes enthält:
- einen Boden (14), der von einer Vielzahl von Öffnungen (20a-20g) durchquert wird;
- äußere Umfangswände (16a-16d) mit zwei Gruppen von Eingängen (22a, 22b) für den Durchgang von einzelnen Lichtleitfasern (F01-F04), wobei die zwei Gruppen sich jeweils auf zwei einander gegenüberliegenden Wänden (16a, 16b) erstrecken; und
- einen Deckel (12);
wobei dieses Gehäuse von den Außenwänden unterschiedliche Aufrolleinrichtungen (40) aufweist, um mindestens eine Faser (FO1-FO4) im Gehäuse (10) aufgerollt zu halten;
wobei das Gehäuse **dadurch gekennzeichnet ist, dass** es außerdem Folgendes enthält:
- einen Abdeckungsteil (70) des Bodens des Gehäuses:
• der eine Grundplatte (71), die einen Zylinder (52) und Elemente (42a, 42b) der Aufrolleinrichtungen trägt, sowie Schraubschächte (54a, 54b) enthält,
• und fähig ist, lösbar ausgehend von der Unterseite des Gehäuses (10) angesetzt zu werden, indem er den Boden (14) des Gehäuses (10) durchquert und die Öffnungen (20a-20g) so verschließt, dass die Dichtheit des Gehäuses gewährleistet wird.

2. Gehäuse (10) nach Anspruch 1, bei dem der Boden (14), die äußeren Umfangswände (16a-16d) und der Deckel (12) in einem Stück geformt werden.

3. Gehäuse (10) nach Anspruch 1, bei dem die Aufrolleinrichtungen des Gehäuses elastische Zungen (32c1-32c4) aufweisen, die mit entsprechenden Öffnungen (20c) angeformt werden, die gegenüber auf dem Boden vorhanden sind, wobei diese elastischen Zungen miteinander über einen Teil (37c) verbunden sind, der mit dem Boden verbunden ist und bezüglich dessen vorsteht.

4. Gehäuse (10) nach Anspruch 1, bei dem die Aufrolleinrichtungen des Gehäuses Führungslaschen (48a, 48b) aufweisen, die mit entsprechenden Öffnungen (20d) angeformt werden, die gegenüber auf dem Boden vorhanden sind, wobei diese Führungslaschen die allgemeine Form einer Spitze haben und sich ausgehend vom freien oberen Rand eines Führungsbogens (46a, 46b) parallel zum Boden erstrecken.

5. Gehäuse (10) nach Anspruch 1, bei dem der Abdeckungsteil (70) des Bodens des Gehäuses außerdem Tragzapfen (72a1, 72a2, 72b1, 72b2) der Fasern vor den Gruppen von Eingängen (22a, 22b) aufweist.
